(19) Europäisches Patentamt
European Patent Office
Office européen des brevets

(11) **EP 1 194 304 B1**

(12) **EUROPÄISCHE PATENTSCHRIFT**

(45) Veröffentlichungstag und Bekanntmachung des Hinweises auf die Patenterteilung:
**26.07.2006 Patentblatt 2006/30**

(21) Anmeldenummer: **00936851.5**

(22) Anmeldetag: **02.06.2000**

(51) Int Cl.:
**B60C 23/06** (2006.01)

(86) Internationale Anmeldenummer:
**PCT/EP2000/005033**

(87) Internationale Veröffentlichungsnummer:
**WO 2000/078566 (28.12.2000 Gazette 2000/52)**

(54) **VERFAHREN UND VORRICHTUNG ZUR ERSTELLUNG EINER KORREKTURWERTTABELLE, ZUR ERMITTLUNG EINER PRÜFGRÖSSE UND ZUR ERKENNUNG DES DRUCKVERLUSTS IN EINEM REIFEN EINES RADES**

METHOD AND DEVICE FOR CREATING A COMPENSATION VALUE TABLE, FOR DETERMINING A TEST VARIABLE, AND FOR IDENTIFYING THE PRESSURE LOSS IN A TIRE OF A WHEEL

PROCEDE ET DISPOSITIF POUR ELABORER UNE TABLE DE VALEURS DE CORRECTION, DETERMINER UNE VALEUR D'ESSAI ET DETECTER UNE PERTE DE PRESSION DANS UN PNEU DE ROUE

(84) Benannte Vertragsstaaten:
**DE FR**

(30) Priorität: **19.06.1999 DE 19928138**
**19.06.1999 DE 19928137**
**10.12.1999 DE 19959554**

(43) Veröffentlichungstag der Anmeldung:
**10.04.2002 Patentblatt 2002/15**

(73) Patentinhaber: **Continental Teves AG & Co. oHG 60488 Frankfurt am Main (DE)**

(72) Erfinder:
• **GRIESSER, Martin D-65760 Eschborn (DE)**
• **IHRIG, Hans, Georg D-64293 Darmstadt (DE)**

(56) Entgegenhaltungen:
**DE-A- 4 337 443       DE-A- 19 721 480**

**Beschreibung**

Die vorliegende Erfindung betrifft ein Verfahren und eine Vorrichtung zur Erstellung einer Korrekturwerttabelle, zur Ermittlung einer Prüfgröße und zur Erkennung des Druckverlusts in einem Reifen eines Rades gemäß den Oberbegriffen der unabhängigen Ansprüche. Ein solches Druckverlusterkennungsverfahren ist aus der DE 19 721 480 A1 bekannt.

Ferner ist aus DE 43 37 443 A1 ein Verfahren und eine Schaltungsanordnung zur Reifendrucküberwachung bekannt, wobei das Verfahren eine Korrekturwerttabelle für eine Prüfgröße zur Erkennung eines Druckverlusts im Reifen eines Fahrzeugs erstellt. Hierbei wird eine Fahrdynamikgröße des Fahrzeugs und ein Korrekturwert für die Prüfgröße ermittelt, wobei der Korrekturwert in Abhängigkeit vom Wert der Fahrdynamikgröße, der bei der Korrekturwertermittlung herrschte, gespeichert wird.

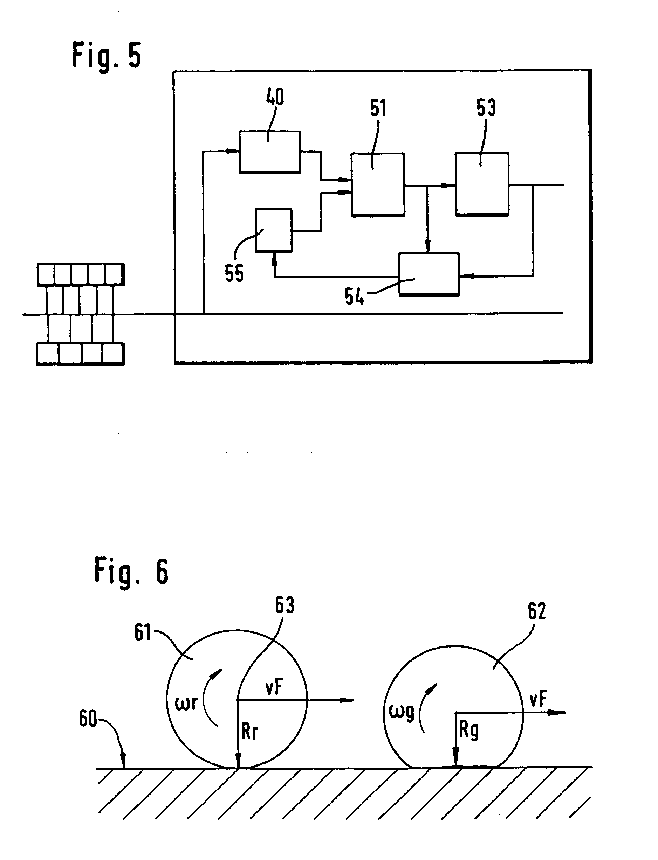

Anhand von Fig. 6 werden grundlegende physikalische Zusammenhänge erläutert. 61 symbolisiert ein reguläres Rad auf der Fahrbahn 60. Der Radmittelpunkt 63 bewegt sich mit dem Fahrzeugchassis und damit mit der Fahrzeuggeschwindigkeit vF fort. Entsprechend dem allgemein gültigen Zusammenhang zwischen der Bahngeschwindigkeit v eines Punktes auf einer sich mit der Winkelgeschwindigkeit ω drehenden Scheibe, wobei der Punkt vom Drehmittelpunkt um den Radius R beabstandet ist, nämlich $\omega = v/R$, ergibt sich in Fig. 6 links $\omega r = vF/Rr$. Bei Fahrzeugrädern ist die Winkelgeschwindigkeit ω mittels Radsensoren ermittelbar, während die Fahrzeuggeschwindigkeit v in der Regel sensorisch nicht erfaßt werden kann. Bei Druckverlust ändert sich der dynamische Abrollumfang eines Rades. Das Rad dreht sich schneller im vergleich zum Normalzustand bzw. im Vergleich zu dem Rad ohne Druckverlust.

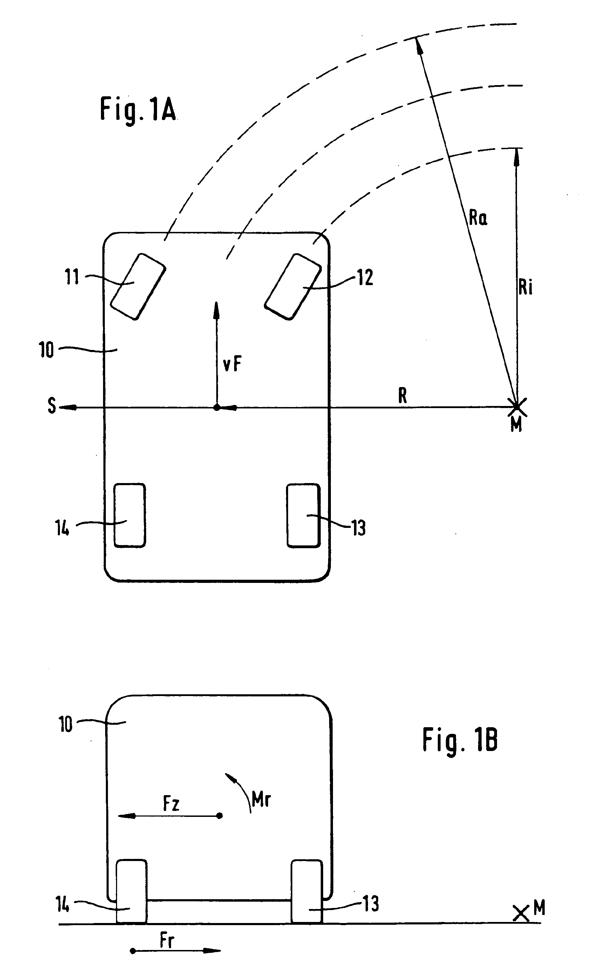

Zusätzliche Effekte können die Winkelgeschwindigkeiten der Räder beeinflussen, ohne daß die sich dann ergebende Unterschiedlichkeit zwischen den Winkelgeschwindigkeiten einzelner Räder ein Hinweis auf Druckverlust in einem der Räder wäre. Beispiele hierfür sind Antriebsschlupf, unterschiedliche Geometrien bei Kurvenfahrt, unsymmetrische Lastverteilung im Fahrzeug und ähnliches. Bezugnehmend auf die Fig. 1A bis 1C werden zwei Effekte erläutert, die sich aus der Fahrdynamik, insbesondere bei Kurvenfahrt oder im Antriebsfall ergeben.

Fig. 1A zeigt ein Fahrzeug 10 mit Rad 11 vorne links, Rad 12 vorne rechts, Rad 13 hinten rechts und Rad 14 hinten links. Das Fahrzeug fährt mit Geschwindigkeit vF eine Kurve nach rechts, wobei der Fahrzeugschwerpunkt S angenommen dem Radius R um den Mittelpunkt M herum folgt. Die Räder 12 und 13 am Fahrzeug rechts laufen auf der Innenbahn und haben daher eine Bahn mit annähernd dem gleichen, kleineren Innenradius Ri, während die Räder 11 und 14 am Fahrzeug links auf der Außenbahn laufen und deshalb eine Kurve mit dem größeren Außenradius Ra befahren. Da sie somit in der gleichen Zeit eine größere Strecke zu fahren haben, zeigen die kurvenaußenseitigen Räder 11 und 14 eine größere Bahngeschwindigkeit und damit auch eine größere Winkelgeschwindigkeit als die kurveninnenseitigen Räder 12 und 13. Diese Unterschiede sind jedoch nicht auf Druckverlust in einem der Räder zurückzuführen.

Ein weiterer Effekt wird bezugnehmend auf Fig. 1B erläutert. Das in Fig. 1A gezeigte Fahrzeug ist hier von hinten dargestellt, es folgt der gleichen Bahn wie das in Fig. 1A gezeigte Fahrzeug (Kurve nach rechts, also in Fig. 1B in die Zeichenebene hinein nach rechts) um den Mittelpunkt M mit Radius R. Aufgrund der Kurvenfahrt ergibt sich eine Zentrifugalkraft Fz, die am Fahrzeugschwerpunkt S angreift. Die gegenhaltende Kraft ist die Reibungskraft Fr zwischen den Fahrzeugrädern und der Fahrbahn. Da diese Kräfte nicht in der gleichen Ebene wirken, ergibt sich ein Rollmoment Mr in der dargestellten Situation gegen den Uhrzeigersinn um die Längsachse des Fahrzeugs. Dies bewirkt, daß die kurvenaußenseitigen Räder 11 und 14 stärker belastet sind als die kurveninnenseitigen Räder 12 und 13. Sie werden dadurch stärker zusammengedrückt, zeigen damit einen kleineren dynamischen Abrollradius und damit eine höhere Winkelgeschwindigkeit. Der Effekt aus Fig. 1B läuft in die gleiche Richtung wie der anhand von Fig. 1A beschriebene, so daß sie sich addieren.

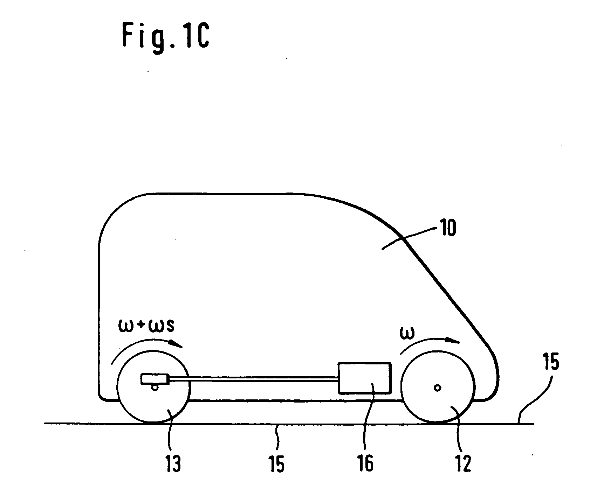

Fig. 1C zeigt eine Situation, in der sich das Fahrzeug 10 auf der Fahrbahn 15 angetrieben vom Motor 16 bewegt. Angetrieben ist dabei im Beispiel der Fig. 1 die Hinterachse, so daß deren Räder 13, 14 sowohl Antriebs- als auch Bremsschlupf aufweisen können, während die Räder der Vorderachse 11, 12 nur Bremsschlupf aufweisen können. Insbesondere im Antriebsfall rollen die Räder 11, 12 der Vorderachse frei ab und haben damit eine Winkelgeschwindigkeit $\omega = vF/r$, während die Räder der Hinterachse häufig einen höheren Betrag aufweisen, da sich zum schon genannten Betrag ω der Radschlupf ωs addiert. Auch dieser Effekt hat nichts mit unterschiedlichen Winkelgeschwindigkeiten aufgrund von Druckverlust in einem der Reifen zu tun.

Dementsprechend ist es wichtig, Störeffekte gemäß den Fig. 1A bis 1C zu eliminieren. Die DE 19 721 480 A1 schlägt hierzu ein Verfahren vor, bei dem Radgeschwindigkeiten paarweise addiert, die Summen zueinander ins Verhältnis gesetzt und der Quotient in seinem Wert überprüft wird. Insbesondere wird ein Verfahren vorgeschlagen, bei dem die Radgeschwindigkeiten der auf je einer Diagonale liegenden Räder addiert und die sich ergebenden Werte dividiert werden. Es ergibt sich dann ein Quotient, der mehr oder weniger stark vom idealen Wert 1 (Gleichlauf aller Räder) abweicht. Wenn insbesondere ein Reifen mit Druckverlust vorliegt, wird entweder im Zähler oder im Nenner des Bruchs ein deutlich kleinerer Wert auftreten, so daß deshalb auch der entstehende Quotient deutlich nach oben oder unten vom idealen Wert 1 abweichen wird. Es können dann weitere Überprüfungen vorgenommen werden, um gegebenenfalls ein Rad mit Druckverlust zu erkennen. Durch Betrachtung bzw. Summierung der Werte von einander diagonal gegenüberliegenden Rädern werden Effekte von Kurvengeometrien bzw. Antriebsschlupf häufig ausgeglichen. Andererseits erfolgt der Ausgleich nicht immer mit Sicherheit, so daß zur Vermeidung von Fehlerkennungen vergleichsweise weit gezogene Toleranzen gewählt werden müssen. Dadurch erfolgt die Erkennung erst relativ spät. Bei Kurvenfahrten können beispielsweise Differentialsperren das Ausgleichen von Effekten aufgrund unterschiedlicher Kurvengeometrien verhindern. Wenn eine Achse gesperrt ist, laufen deren Räder mit gleicher Bahn- und Winkelgeschwindigkeit, so daß sie bei der Summierung zum jeweiligen anderen Partner nicht zum Ausgleich der Unsymmetrie beitragen können.

Aufgabe der Erfindung ist es, ein Verfahren und eine Vorrichtung zur Erstellung einer Korrekturwerttabelle, zur Ermittlung einer Prüfgröße und zur Erkennung des Druckverlusts in einem Reifen eines Rades anzugeben, die eine zuverlässige Erkennung eines Druckabfalls in einem Reifen erlauben.

Diese Aufgabe wird mit den Merkmalen der unabhängigen Ansprüche gelöst. Abhängige Ansprüche sind auf bevorzugte Ausführungsformen der Erfindung gerichtet.

Beim Verfahren zur Erstellung einer Korrekturwerttabelle für eine Prüfgröße zur Erkennung eines Druckverlusts im Reifen eines Fahrzeugs werden einzelne Korrekturwerte für die Prüfgröße ermittelt und in Abhängigkeit vom Wert einer Fahrdynamikgröße, die während oder zum Zeitpunkt der Korrekturwertermittlung herrschte, gespeichert. Es entsteht dadurch im Laufe der Zeit eine Tabelle von Korrekturwerten. Eingangsgröße der Tabelle ist die Fahrdynamikgröße, Ausgangswert ein somit fahrdynamikabhängiger Korrekturwert, so daß die Prüfgröße zur Erkennung eines Druckverlusts im Reifen eines Fahrzeugs fahrdynamikabhängig korrigiert werden kann.

Das Ermitteln des Korrekturwerts ist ein Lernvorgang. Die Korrekturwertermittlung kann dann erfolgen, wenn die Fahrzeugdynamik, insbesondere die Fahrdynamikgröße, hinsichtlich ihrer Werte oder hinsichtlich ihrer Zeitverläufe, sei es absolut oder relativ, bestimmten Bedingungen genügt. Insbesondere kann gefordert werden, daß die Fahrzeugdynamik bzw. insbesondere die angesprochene Fahrdynamikgröße eine gewisse Konstanz zeigt (innerhalb eines Wertbereichs innerhalb eines Zeitfensters), oder daß die Veränderung der Fahrdynamik kleiner als ein Schwellenwert ist. Die Prüfgröße kann aus mehreren Radradien bzw. Größen, die diesen Radradien entsprechen, ermittelt werden. Beispielsweise kann die Prüfgröße ein Quotient zweier Summen von je zwei Radradien sein.

Der mögliche Wertebereich der Fahrdynamikgröße kann in Bereiche unterteilt sein. Bei digitaler Darstellung des Werts der Fahrdynamikgröße kann sich die Bereichsteilung schon durch die digitale Quantisierung ergeben. Für einzelne oder mehrere Werte der Fahrdynamikgröße können Korrekturwerte wie oben beschrieben ermittelt werden. Für andere Werte der Fahrdynamikgröße können Korrekturwerte durch Interpolation mit geeigneten Verfahren bestimmt werden (linear, allgemein polynom).

Die Fahrdynamikgröße kann ein Radmoment sein und/oder eine Kurvenkenngröße. Die Prüfgröße kann aus den Größen mehrerer Räder des Fahrzeugs ermittelt werden. Sie kann insbesondere der Quotient zweier Summen solcher Größen sein.

Nachfolgend werden bezugnehmend auf die Zeichnung einzelne Ausführungsformen der Erfindung beschrieben. Es zeigen

Fig. 1A bis 1C Darstellungen zur Erläuterung des Einflusses von Störgrößen,

Fig. 2 Darstellungen von idealen und realen Verläufen von Prüfgrößen,

Fig. 3 ein Blockdiagramm einer Korrekturwerttabellenerstellungsvorrichtung,

Fig. 4 ein Blockdiagramm einer Vorrichtung zur Ermittlung einer Prüfgröße für den Reifendruck,

Fig. 5 eine Vorrichtung zur Erkennung des Druckverlusts in einem Reifen eines Rades, und

Fig. 6 eine Darstellung zur Erläuterung physikalischer Zusammenhänge.

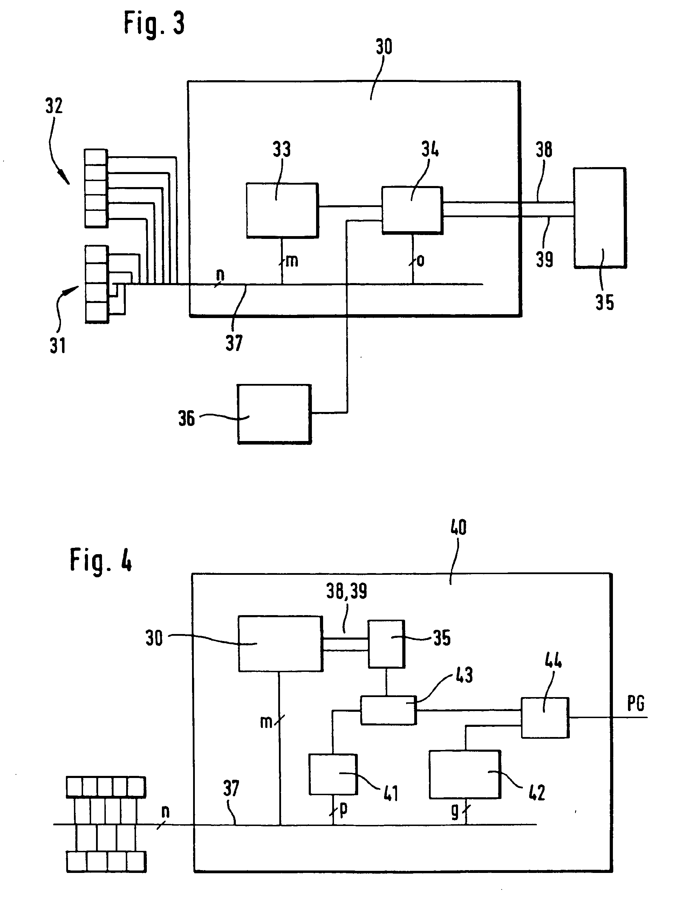

In Fig. 3 bezeichnet 30 allgemein die Vorrichtung zur Erstellung einer Korrekturwerttabelle. Sie empfängt Sensorsignale aus Sensoren 31 und 32, wobei in Fig. 3 31 die vier Radsensoren (je einer an je einem Rad) symbolisieren, 32 weitere Sensoren wie z.B. Beschleunigungssensor, Gierratensensor, Lenkwinkelsensor, Getriebesensor, Motordrehzahlsensor und ähnliches. In der Regel wird es sich um digitale Daten handeln, die schon verschiedene Aufbereitungsschritte (Wandlung, Filterung, Normierung) durchlaufen haben. Die Daten können von einem Fahrzeugdatenbus 37 abgegriffen werden.

33 symbolisiert eine erste Ermittlungseinrichtung zum Ermitteln einer Fahrdynamikgröße. Die erste Ermittlungseinrichtung 33 kann insbesondere die Radsignale und gegebenenfalls weitere Sensorsignale oder Statusgrößen aus anderen Regelungskomponenten empfangen und daraus die Fahrdynamikgröße des Fahrzeugs ermitteln. Beispielsweise kann sie ein Radmoment und/oder eine Kurvenkenngröße ermitteln.

Die erste Ermittlungseinrichtung 33 ermittelt den Wert der Fahrdynamikgröße in der Regel auch als digitale Größe. Schon durch diese sich aufgrund des Digitalisierens ergebende Quantisierung folgt eine Bereichsunterteilung des maximal möglichen Wertebereichs der Fahrdynamikgröße. Die Bereichsunterteilung kann je nach Wunsch mehr oder weniger grob sein. Bei einer Kurvenkenngröße kann es ausreichen, drei Bereiche zu wählen, nämlich links, geradeaus, rechts. Natürlich sind auch feinere Staffelungen möglich. Sinngemäß das gleiche gilt, wenn die Fahrdynamikgröße das Antriebsmoment ist. Hierbei kann es Ausführungsformen geben, in denen das beschriebene Verfahren nur im Antriebsfall (Radmoment größer Null) vorgenommen wird, weil dann davon ausgegangen werden kann, daß die nicht angetriebenen Räder frei abrollen.

In einer weiteren Ausführungsform wird das Verfahren im ausgekuppelten oder im nicht-Antriebs- und nicht-Bremsfall (Radmoment ungefähr 0), wenn alle Räder frei rollen, angewandt.

34 symbolisiert eine zweite Ermittlungseinrichtung zum Ermitteln eines Korrekturwerts und zum Einspeichern desselben in einen Speicher 35 in Abhängigkeit vom Wert der Fahrdynamikgröße, der bei der Korrekturwertermittlung herrschte. Die zweite Ermittlungseinrichtung 34 kann ebenfalls die Radsignale sowie weitere Sensorsignale empfangen. Sie wird vergleichsweise komplexe Überprüfungs- und Ermittlungsschritte vornehmen. Sie kann die zu korrigierende Prüfgröße selbst empfangen (symbolisiert durch Kästchen 36). In der zweiten Ermittlungseinrichtung 34 können zeitliche Verläufe (z.B. Ableitung, Schwankung innerhalb eines Zeitfensters) der Prüfgröße 36 und/oder der Fahrdynamikgröße aus der ersten Ermittlungseinrichtung 33 oder Werte dieser Größen auf Überschreiten bzw. Unterschreiten von Schwellenwerten überprüft werden. Die zweite Ermittlungseinrichtung 34 ermittelt schließlich einen Korrekturwert für die Prüfgröße. Der Korrekturwert wird für einen bestimmten Wert der Fahrdynamikgröße ermittelt, so daß in der Regel gefordert wird, daß während der Ermittlung des Korrekturwerts die Fahrdynamikgröße innerhalb des betrachteten Wertebereichs bleibt oder diesen nur kurzzeitig bzw. nur unwesentlich verläßt.

Vorzugsweise erfolgt die Korrekturwertermittlung oderspeicherung erst, wenn die Fahrdynamik über einen bestimmten Zeitraum innerhalb eines bestimmten Wertebereiches blieb.

Nach Ermittlung des Korrekturwerts wird dieser im Speicher 35 in Abhängigkeit vom Wert der Fahrdynamikgröße eingeschrieben. Der (digitale) Wert der Fahrdynamikgröße kann als Adresse des Speicherplatzes dienen oder zur Adreßermittlung herangezogen werden. 38 symbolisiert eine Datenleitung für den Korrekturwert, 39 eine Adreßleitung, auf der sich die Fahrdynamikgröße widerspiegelt.

Die einzelnen Einträge der Tabelle werden so ermittelt, wie sie verfügbar sind. Die Einstellung der Fahrdynamikgröße ergibt sich in der Regel aus dem vom Fahrer eingestellten Zustand. Für den jeweils herrschenden Wert der Fahrdynamikgröße wird ein Korrekturwert ermittelt, sofern die übrigen Bedingungen dies erlauben. Der ermittelte Korrekturwert wird dann an die entsprechende Tabellenposition eingeschrieben. Somit wird im Lauf der Zeit eine Tabelle aufgebaut. Für bestimmte Werte der Fahrdynamikgröße können Korrekturwerte aus ermittelten Korrekturwerten, die für andere Werte der Fahrdynamikgröße gelten, extrapoliert werden, beispielsweise durch lineare oder quadratische Extrapolation. Extrapolierte Werte können später mit ermittelten Werten überschrieben werden.

In einer Ausführungsform der Korrekturwerttabelle werden Verhältnisse von Kurvenkenngröße zu Prüfgröße ermittelt und gespeichert.

Ganz allgemein ist die Korrekturwertermittlung ein Lernvorgang, bei dem auch durch die Überprüfung fahrsituativ bedingter Bedingungen sichergestellt wird; daß sich im gelernten Korrekturwert lediglich die gewünschte Fehlergröße, aber keine anderen Größen abbilden.

Der Speicher 35 kann ein flüchtiger Speicher sein, dessen Werte verloren gehen, wenn die Stromversorgung ausgeschaltet ist (Abschalten des Fahrzeugs bzw. Entfernen dessen Batterie). Es kann sich aber auch um einen nicht flüchtigen Speicher handeln, so daß die gelernten Werte im Speicher 35 eine Unterbrechung der Stromversorgung überdauern.

Die gespeicherten Korrekturwerte dienen zur Korrektur einer Prüfgröße für den Reifendruck. Die Prüfgröße kann dabei so beschaffen sein, daß sie qualitativ einen Hinweis auf das Vorliegen eines Druckverlusts an irgendeinem der Fahrzeugräder liefert, aber noch keinen konkreten Hinweis darauf, welches Rad tatsächlich den Druckverlust aufweist. Insbesondere kann es sich bei der Prüfgröße um eine Größe handeln, deren Wert aus den Radradien zumindest zweier Räder ermittelt wird. Anstelle der Radradien können Größen verwendet werden, die diese Radradien widerspiegeln, beispielsweise die Radgeschwindigkeiten. Es können mehrere qualitativ unterschiedliche Prüfgrößen vorliegen, so daß auch mehrere unterschiedliche Korrekturwerttabellen zu erstellen wären.

Die Prüfgröße kann ein Quotient zweier Summen sein, wobei jede Summe aus den Radradien zweier der vier Räder des Fahrzeugs gebildet wird. Die Summen enthalten dabei paarweise unterschiedliche Radradien. Eine Summe kann aus den Radradien vorne am Fahrzeug, die andere aus den Radradien hinten am Fahrzeug gebildet werden. Der Quotient dieser beiden Summen bildet eine Prüfgröße, für die, wie oben beschrieben, abhängig vom Wert der Fahrdynamikgröße Korrekturwerte zum Aufbau einer Korrekturwerttabelle, deren Eingangswert der Wert der Fahrdynamikgröße ist, ermittelt werden.

Eine qualitativ andere Prüfgröße kann gebildet werden als Quotient einer Summe der Radradien links am Fahrzeug und einer Summe der Radradien rechts am Fahrzeug.

In all den genannten Prüfgrößen wird ein sich aufgrund von Reifendruckverlust verkleinerndes und dadurch schneller drehendes Rad eine Abweichung des sich ergebenden Quotienten vom Normwert bewirken, so daß anhand dieser Abweichung der Reifendruckverlust erkannt werden kann.

Die Fahrdynamikgröße kann ein Radmoment sein oder eine Größe, die bezugnehmend auf ein oder mehrere Radmomente ermittelt wurde (beispielsweise Mittelwert, Maximum oder Minimum). Ein Radmoment kann bezugnehmend auf ein beispielsweise gemessenes Motorabtriebsmoment und die zwischen Motor und Rad herrschende Übersetzung ermittelt werden. Grundsätzlich kann kann das Motormoment aus dem indizierten Motormoment-Reibmoment abgeleitet werden.

Die Übersetzung kann aus der Motordrehzahl und der Raddrehzahl bestimmt werden. Ein ausgekuppelter Zustand wird entsprechend berücksichtigt. Diese Information kann über einen Datenbus zur Verfügung gestellt werden, oder diese Information kann aus Plausibilitätsbetrachtungen gewonnen werden.

Bei der Ermittlung des Radmoments kann das Reibmoment von Motor und Getriebe mitberücksichtigt werden.

Die Fahrdynamikgröße kann auch eine Kurvenkenngröße sein. Insbesondere können hierzu eine oder mehrere der folgenden Größen herangezogen werden: die Gierrate (Winkelgeschwindigkeit um die Hochachse, aus Sensor oder Ermittlungseinrichtung), der Kurvenradius in Verbindung mit der Fahrzeuggeschwindigkeit oder der Fahrzeugbeschleunigung, der Lenkwinkel in Verbindung mit der Fahrzeuggeschwindigkeit oder der Fahrzeugbeschleunigung, die Querbeschleunigung (aus Sensor oder Ermittlungseinrichtung). Die Kurvenkenngröße kann aus den Radsignalen und/oder aus anderen Sensorsignalen oder ermittelten Signalen bestimmt werden. Die Kurvenkenngröße kann redundant erzeugt werden. Die Kurvenkenngrößenermittlung kann so ausgelegt sein, daß sie primär bezugnehmend auf die Radsignale arbeitet, aber dann, wenn beispielsweise ein Radsignal gestört ist, die Kurvenkenngrößenermittlung bezugnehmend auf andere Signale erfolgt. Soweit die Kurvenkenngröße bezugnehmend auf Signale von einem Gierratensensor und/oder Beschleunigungssensor ermittelt wird, ist dafür Sorge zu tragen, daß Rückwärtsfahrt eines Fahrzeugs nicht zu Fehlern führt. Gegebenenfalls sind Vorzeichenumkehrungen vorzunehmen.

Die Erstellung der Korrekturwerttabelle kann auch von allgemeinen Bedingungen abhängig gemacht werden. Beispielsweise kann sie bei bzw. nach bestimmten Kilometerständen erfolgen. Sie kann auch auf Fahrerveranlassung hin stattfinden. Allgemein können Bedingungen gewählt werden, die verhindern, daß tatsächliche Reifendruckverluste als Korrekturfaktoren gelernt werden, was zur Nichterkennung eines Reifendruckverlusts führen könnte. Andererseits kann der zeitliche Verlauf der einzelnen Korrekturwerte verfolgt werden. Wenn sich ein Korrekturwert innerhalb einer bestimmten Zeitdauer (beispielsweise innerhalb von zwei Stunden) und/oder innerhalb einer bestimmten Fahrstrecke (beispielsweise innerhalb von 150 km) kontinuierlich in eine Richtung ändert, kann dies ein Hinweis darauf sein, daß ein tatsächlicher Druckverlust fälschlicherweise als Korrekturwert eingelernt wird. Dies kann dann seinerseits zu einer Warnung führen.

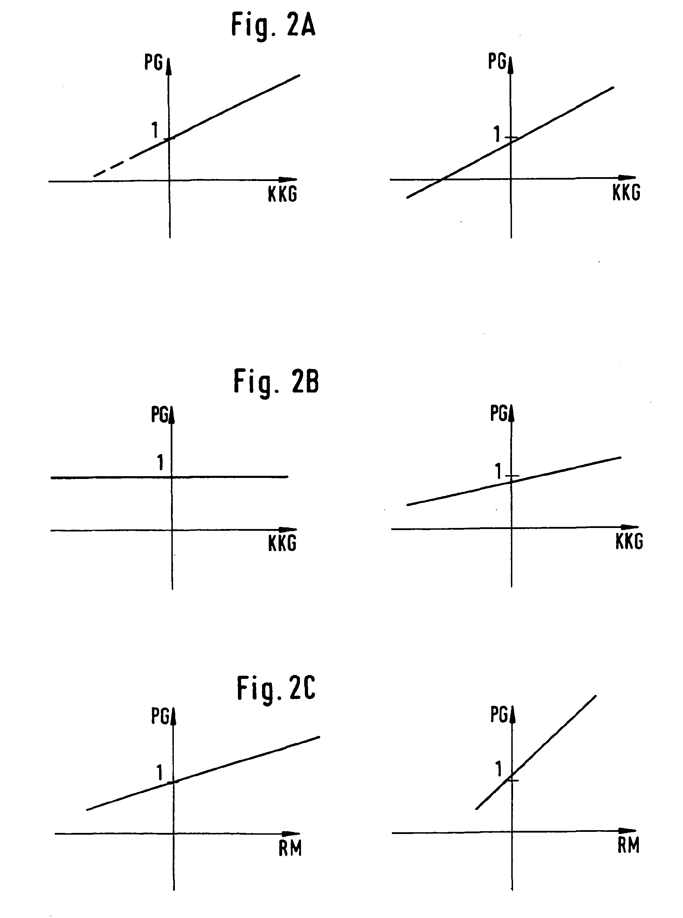

Die Fig. 2A bis 2C zeigen ideale und reale Verläufe verschiedener Prüfgrößen PG in Abhängigkeit von verschiedenen Fahrdynamikgrößen, nämlich in Abhängigkeit von der Kurvenkenngröße KKG (Fig. 2A und 2B) bzw. in Abhängigkeit vom Radmoment RM (Fig. 2C).

Fig. 2A zeigt links den idealen Verlauf einer Prüfgröße, die wie folgt errechnet wurde:

$$PG = \frac{r11 + r14}{r12 + r13}$$

wobei die Werte r jeweils Radradien bzw. entsprechende Werte (z.B. Winkelgeschwindigkeit, wobei hier dann zu berücksichtigen ist, daß diese sich invers zu den Radien verhalten), und die Beiziffern zur Identifizierung der einzelnen Räder entsprechend den Bezugsziffern in Fig. 1A vergeben sind. Im idealen Verlauf (links) hat die Prüfgröße PG bei Kurvenkenngröße 0 (Geradeausfahrt) den Wert 1, da sich idealerweise alle Räder bei gleichen Radradien gleich schnell drehen, so daß Zähler und Nenner den gleichen Wert und deren Quotient somit den Wert 1 annehmen. Aus den unterschiedlichsten Gründen jedoch ist der reale Verlauf anders, und zwar sowohl hinsichtlich Nullpunkt als auch hinsichtlich Steigung. Er ist in Fig. 2A rechts abgebildet. Die Prüfgröße läuft nicht mehr durch den Punkt 0/1, beispielsweise aufgrund unterschiedlich stark abgefahrener Reifen oder unsymmetrischer Fahrzeugbeladung), und auch die Steigung kann anders sein. Grundsätzlich wird darauf hingewiesen, daß die Kurvenkenngröße nur qualitativ wiedergegeben ist. Der Verlauf muß nicht einer Geraden ähneln. Es ist aber über der Kurvenkenngröße ein monotones Verhalten (steigend oder fallend) zu erwarten, das letztendlich die unterschiedlichsten Radgeschwindigkeiten aufgrund der in Fig. 1A erläuterten geometrischen Verhältnisse widerspiegelt.

Fig. 2B zeigt den idealen und realen Verlauf der Prüfgröße PG, die wie folgt ermittelt wurde:

$$PG = \frac{r11 + r13}{r12 + r14}$$

Hier wurden jeweils die Werte der Diagonalen addiert und die Summen zum Quotienten verrechnet. Im idealen Verlauf (Fig. 2B links) heben sich die unterschiedlichen Geometrieverhältnisse auf, so daß ein gerader Verlauf durch den Punkt 1 auf der Ordinate zu erwarten wäre. Auch hier ergeben sich wieder aufgrund verschiedener Störeinflüsse, die nicht auf Druckverluste zurückzuführen sind, andere reale Verläufe. Ein Beispiel ist in Fig. 2B rechts gezeigt. Die Prüfgröße läuft abermals nicht durch den Punkt 0/1 und kann auch hier eine bestimmte Steigung haben, wobei abermals darauf hingewiesen wird, daß nicht unbedingt eine Gerade den richtigen Verlauf der Prüfgröße wiedergeben muß.

Fig. 2C zeigt den Verlauf der Prüfgröße PG in Abhängigkeit vom Radmoment, wobei die Prüfgröße wie folgt ermittelt wurde:

$$PG = \frac{r11 + r12}{r13 + r14}$$

Soweit nur der Antriebsfall (Radmoment wird als positiv angesehen) betrachtet wird, ergibt sich ein Kennlinienverlauf nur für positive Radmomente. Im idealen Verlauf (Fig. 2C links) ergibt sich für Radmoment 0 der Wert 1, da dann alle Räder mit gleichem Radius frei und damit gleich schnell abrollen, so daß sich gleiche Werte im Zähler und Nenner des Bruchs ergeben. Auch hier können sich im realen Fall (Fig. 2C rechts) Abweichungen ergeben. Im antriebslosen Fall muß der Wert nicht bei 0 sein, und auch der weitere Verlauf (z.B. die Steigung bei einer Geraden) kann anders sein (siehe Fig. 2C rechts). Im Schubbetrieb ergibt sich ein Kennlinienverlauf nur für negative Radmomente.

Die in den Fig. 2A bis 2C jeweils rechts gezeigten realen Verläufe zeigen Abweichungen vom idealen Verlauf, die aufgrund sekundärer Störgrößen verschiedenster Ursachen auftreten (abgefahrene Reifen, unsymmetrische Fahrzeugbeladung), die neben den primären Störgrößen (Kurvengeometrie, Rollmoment, Antriebsschlupf) zu Abweichungen der Prüfgröße vom idealen Verlauf führen können, die nichts mit einem möglicherweise zu erkennenden Druckverlust in einem Reifen zu tun haben. Durch Lernen der Korrekturwerte werden diese weiteren Einflußgrößen eliminiert.

Fig. 4 zeigt eine Vorrichtung zur Ermittlung einer Prüfgröße für den Reifendruck in den Reifen eines Fahrzeugs. Sie weist eine Erstellungsvorrichtung 30 zum Erstellen einer Korrekturwerttabelle abgelegt im Speicher 35 für die Prüfgröße auf. Die Erstellungsvorrichtung 30 kann wie oben beschrieben bzw. wie in Fig. 3 dargestellt beschaffen sein. Die Prüfgrößenermittlungsvorrichtung weist außerdem eine zweite Ermittlungseinrichtung 41 zum Ermitteln einer Fahrdynamikgröße auf. Es handelt sich hierbei um diejenige Fahrdynamikgröße, die als Eingangsgröße für die im Speicher 35 abgelegte Korrekturwerttabelle benötigt wird. Die zweite Ermittlungseinrichtung 41 kann die gleiche wie die erste Ermittlungseinrichtung 33 sein.

Eine dritte Ermittlungseinrichtung 42 ermittelt die Fahrdynamikgröße in herkömmlicher Weise, beispielsweise indem sie die Größe bezugnehmend auf die Radradien mehrerer Räder ermittelt. Hierzu können bekannte Verfahren herangezogen werden. Es können die oben beschriebenen Quotienten aus Summen gebildet werden.

Eine Leseeinrichtung 43 liest aus der Korrekturwerttabelle im speicher 35 nach Maßgabe der in der zweiten Ermittlungseinrichtung 41 ermittelten Fahrdynamikgröße einen Korrekturwert aus.

Eine Korrektureinrichtung 44 korrigiert den von der zweiten Ermittlungseinrichtung 41 ermittelten Wert der Prüfgröße. Der Korrekturwert kann ein additiver Wert oder ein Faktor sein, mit dem der ermittelte Wert addiert oder multipliziert wird. Wenn die Prüfgröße der Quotient zweier "symmetrischer" Summen ist, liegt der ideale Wert bei 1. Ein realer Wert kann davon abweichen und beispielsweise bei 0,97 liegen. Durch Anwendung des Korrekturwerts würde der Wert der Prüfgröße wieder beispielsweise auf 1,00 gebracht werden.

Fig. 5 zeigt eine Vorrichtung zur Erkennung des Druckverlusts in einem Reifen eines Rades. Die Erkennungsvorrichtung weist eine Ermittlungsvorrichtung 40 zum Ermitteln einer Prüfgröße für den Reifendruck auf. Die Ermittlungsvorrichtung kann wie oben beschrieben und insbesondere wie in Fig. 4 schematisch gezeigt ausgebildet sein. Sie ermittelt eine korrigierte Prüfgröße, wobei die Prüfgröße bezugnehmend auf Radradien mehrerer Räder des Fahrzeugs ermittelt wird.

Die Erkennungsvorrichtung weist außerdem eine Vergleichseinrichtung 51 auf, die die korrigierte Prüfgröße mit einem oder mehreren Schwellenwerten vergleicht. Eine nach der Korrektur noch vorliegende Abweichung wäre ein Hinweis darauf, daß entweder der Zähler oder der Nenner des Bruchs aufgrund eines Druckverlusts einen veränderten Wert zeigt, so daß demzufolge auch der Quotient sich ändert. Da die Veränderung im Zähler oder im Nenner vorliegen kann, kann die Prüfgröße auf Überschreitung eines über dem Normwert liegenden oberen Schwellenwerts und auf Unterschreitung eines unter dem Normwert liegenden unteren Schwellenwerts überprüft werden. Die Schwellenwerte sind durch 55 symbolisiert. Auch bei diesen Schwellenwertüberprüfungen können zeitliche Betrachtungen angestellt werden, um zu verhindern, daß einzelne Ausreißer der korrigierten Prüfgröße zu Fehlerkennungen führen. Auch die Prüfgröße selbst (korrigiert oder unkorrigiert) kann noch Bearbeitungen unterworfen sein, beispielsweise einer Filterung oder Glättung beispielsweise durch Tiefpaßfilterung oder Mittelwertbildung über ein Zeitfenster hinweg. Die zeitliche Betrachtung bei der Schwellenwertüberprüfung, die in einer Erkennungslinieinrichtung 53 vorgenommen wird, kann die Überprüfung umfassen, ob die "Ausreißbedingung" länger als eine bestimmte Zeitdauer oder innerhalb eines bestimmten ersten Zeitraums länger als insgesamt ein bestimmter kleinerer zweiter Zeitraum dauert.

Ergibt sich schließlich, daß die Prüfgröße einen Schwellenwert erreicht oder passiert hat, ist dies ein erster Hinweis auf das Vorliegen eines Druckverlusts. Soweit die Prüfgröße bezugnehmend auf die Radradien mehrerer Räder des Fahrzeugs ermittelt wird, kann dieser Überprüfung noch nicht entnommen werden, welches Rad tatsächlich den Druckverlust aufweist. Aus der Information dahingehend, ob entweder der obere Schwellenwert überschritten oder der untere Schwellenwert unterschritten wurde, läßt sich jedoch herleiten, welches Radpaar den Druckverlust aufweist. Es kann dann gegebenenfalls eine qualitativ andere Prüfgröße zur Bestimmung des konkreten Rads, an dem ein Druckverlust vorliegt, herangezogen werden.

Sowohl die Korrekturwertermittlung als auch die Prüfgrößenermittlung und die Druckverlusterkennung können geschwindigkeitsabhängig erfolgen. Die Fahrzeuggeschwindigkeit kann damit ein weiterer Tabelleneingang sein, wenn die Korrekturwerttabelle erstellt wird.

Wenn eine Überprüfung ergeben hat, daß die Prüfgröße einen Schwellenwert erreicht oder passiert hat, kann dies als erste Vermutung eines Druckverlusts angesehen werden. Das weitere Verfahren kann dann so sein, daß auf diese Vermutung hin die Überprüfungsschwellenwerte mittels einer Veränderungseinrichtung 54 so verändert werden, daß die Druckverlusterkennung weniger empfindlich ist. Wenn dann,-vorzugsweise innerhalb eines bestimmten Zeit- oder Streckenfensters, der veränderte Schwellenwert abermals erreicht oder passiert wird, wird auf Druckverlust erkannt und eine Warnung ausgegeben.

Soweit die Kurvenkenngröße ein Radmoment ist, kann die Prüfgröße der Quotient aus der Summe der Radradien vorne und der Summe der Radradien hinten sein. Bei erster Vermutung eines Druckverlusts kann die Schwellenwertbeeinflussung so erfolgen, daß an der angetriebenen Achse die Schwellenwerte für weitere Erkennungsvorgänge anders modifiziert werden als die an der nicht angetriebenen Achse. Die Modifizierung kann ebenfalls in Abhängigkeit vom Radmoment und/oder von der Getriebestufe des Fahrzeugs erfolgen.

**Patentansprüche**

1. Verfahren zum Erstellen einer Korrekturwerttabelle für eine Prüfgröße zur Erkennung eines Druckverlusts im Reifen eines Fahrzeugs, mit den Schritten

    - Ermitteln einer Fahrdynamikgröße des Fahrzeugs, und
    - Ermitteln eines Korrekturwerts für die Prüfgröße und Speichern desselben in Abhängigkeit vom Wert der Fahrdynamikgröße, der bei der Korrekturwertermittlung herrschte,

    **dadurch gekennzeichnet, daß** die Prüfgröße aus einem Quotienten zweier Summen von je zwei Radradien oder Größen, die diese Radradien widerspiegeln, ermittelt wird.

2. Verfahren nach Anspruch 1, **dadurch gekennzeichnet, daß** die Korrekturwertermittlung erst erfolgt, wenn die Fahrzeugdynamik hinsichtlich ihrer Werte und/oder ihrer Zeitverläufe bestimmten Bedingungen genügt.

3. Verfahren nach Anspruch 2, **dadurch gekennzeichnet, daß** die Korrekturwertermittlung oder -speicherung erst erfolgt, wenn die Fahrdynamik über einen bestimmten Zeitraum innerhalb eines bestimmten Wertebereichs blieb.

4. Verfahren nach einem der vorherigen Ansprüche, **dadurch gekennzeichnet, daß** eine Summe bezugnehmend auf Größen an Rädern vorne am Fahrzeug und die andere Summe bezugnehmend auf Größen an Rädern hinten am Fahrzeug gebildet wird.

5. Verfahren nach einem der vorherigen Ansprüche, **dadurch gekennzeichnet, daß** eine Summe bezugnehmend auf Größen an Rädern an der rechten Fahrzeugseite und die andere Summe bezugnehmend auf Größen an Rädern an der linken Fahrzeugseite gebildet wird.

6. Verfahren nach einem der vorherigen Ansprüche, **dadurch gekennzeichnet, daß** eine Summe bezugnehmend auf Größen an Rädern an der einen Fahrzeugdiagonale und die andere Summe bezugnehmend auf Größen an Rädern an der anderen Fahrzeugdiagonale gebildet wird.

7. Verfahren nach einem der vorherigen Ansprüche, **dadurch gekennzeichnet, daß** für mehrere Werte der Fahrdynamikgröße Korrekturwerte ermittelt und für andere Werte der Fahrdynamikgröße Korrekturwerte aus den ermittelten Korrekturwerten extrapoliert werden.

8. Verfahren nach einem der vorherigen Ansprüche, **dadurch gekennzeichnet, daß** die Fahrdynamikgröße ein Radmoment ist, das aus dem Motormoment und der Übersetzung ermittelt wird.

9. Verfahren nach Anspruch 8, **dadurch gekennzeichnet, daß** die Übersetzung aus der Motordrehzahl und der Radgeschwindigkeit ermittelt wird.

10. Verfahren nach einem der vorherigen Ansprüche, **dadurch gekennzeichnet, daß** die Fahrdynamikgröße eine bei Kurvenfahrt gewonnene Kurvenkenngröße ist.

11. Verfahren nach Anspruch 10, **dadurch gekenn-**

**zeichnet, daß** als Kurvenkenngröße eine oder mehrere der folgenden Größen herangezogen werden können:

- die Gierrate, auch in Verbindung mit der Fahrzeuggeschwindigkeit bzw. -beschleunigung
- der Kurvenradius in Verbindung mit der Fahrzeuggeschwindigkeit oder der Fahrzeugbeschleunigung,
- der Lenkradwinkel in Verbindung mit der Fahrzeuggeschwindigkeit oder der Fahrzeugbeschleunigung,
- die Querbeschleunigung, auch in Verbindung mit der Fahrzeuggeschwindigkeit bzw. -beschleunigung.

**12.** Verfahren nach Anspruch 11, **dadurch gekennzeichnet, daß** die Korrekturwertspeicherung in Abhängigkeit von mehreren Kurvenkenngrößen erfolgt.

**13.** Verfahren zum Ermitteln einer korrigierten Prüfgröße zur Erkennung eines Druckverlusts in den Reifen eines Fahrzeugs, mit den Schritten

- Ermitteln einer Prüfgröße aus den Radradien oder aus Größen, die diese Radradien widerspiegeln, zumindest zweier Räder,

**gekennzeichnet durch** die Schritte

- Erstellen einer Korrekturwerttabelle mit dem Verfahren nach einem der Ansprüche 1 bis 12,
- Ermitteln einer Fahrdynamikgröße des Fahrzeugs,
- Auslesen eines Korrekturwerts aus der Tabelle nach Maßgabe des Werts der Fahrdynamikgröße, und
- Korrigieren der Prüfgröße mit dem Korrekturwert.

**14.** Verfahren zur Erkennung des Druckverlusts in einem Reifen eines Rades,
**gekennzeichnet durch** die Schritte

- Ermitteln einer Prüfgröße zur Erkennung eines Druckverlusts im Reifen eines Fahrzeugs mit dem Verfahren nach Anspruch 13,
- Vergleichen der Prüfgröße mit einem Schwellenwert, und
- Erkennen eines Druckverlusts, wenn die Prüfgröße den Schwellenwert erreicht oder passiert.

**15.** Verfahren nach Anspruch 14, **dadurch gekennzeichnet, daß** dann, wenn ein Druckverlust an einem der angetriebenen Räder vermutet wird, der Schwellenwert so verändert wird, daß die Druckverlusterkennung empfindlicher wird.

**Claims**

**1.** Method for preparing a table of correction values for determining a test variable for identifying pressure loss in a tire of a vehicle, comprising the steps of

- determining a driving dynamics variable of the vehicle, and
- determining a correction value for the test variable and storing the said dependent on the value of the driving dynamics variable which prevailed during the correction value determination,

**characterized in that** the test variable is determined from a quotient of two sums of respectively two wheel radii or variables mirroring these wheel radii.

**2.** Method as claimed in claim 1,
**characterized in that** the correction value determination takes place only when the vehicle dynamics satisfies defined conditions with respect to their values and/or their time variations.

**3.** Method as claimed in claim 2,
**characterized in that** the correction value determination or storage takes place only when the vehicle dynamics remained within a defined value range for a defined period of time.

**4.** Method as claimed in any one of the preceding claims,
**characterized in that** one sum is produced with reference to variables on front wheels of the vehicle and the other sum is produced with reference to variables on rear wheels of the vehicle.

**5.** Method as claimed in any one of the preceding claims,
**characterized in that** one sum is produced with reference to variables on wheels of the right vehicle side and the other sum is produced with reference to variables on wheels of the left vehicle side.

**6.** Method as claimed in any one of the preceding claims,
**characterized in that** one sum is produced with reference to variables on the wheels on the one vehicle diagonal and the other sum is produced with reference to variables on wheels of the other vehicle diagonal.

**7.** Method as claimed in any one of the preceding claims,
**characterized in that** correction values are determined for several values of the driving dynamics variable, and correction values are extrapolated from the determined correction values for other values of the driving dynamics variable.

**8.** Method as claimed in any one of the preceding claims,
**characterized in that** the driving dynamics variable is a wheel torque which is determined from the engine torque and the gear ratio.

**9.** Method as claimed in claim 8,
**characterized in that** the gear ratio is determined from the engine speed and the wheel speed.

**10.** Method as claimed in any one of the preceding claims,
**characterized in that** the driving dynamics variable is a curve characteristic value acquired during cornering manoeuvres.

**11.** Method as claimed in claim 10,
**characterized in that** as the curve characteristic value, one or more of the following variables can be taken into account:

- the yaw rate, also in connection with the vehicle speed or acceleration,
- the curve radius in connection with the vehicle speed or the vehicle acceleration,
- the steering angle in connection with the vehicle speed or the vehicle acceleration,
- the lateral acceleration, also in connection with the vehicle speed or acceleration.

**12.** Method as claimed in claim 11,
**characterized in that** the correction value is stored dependent on several curve characteristic values.

**13.** Method of determining a corrected test variable for identifying pressure loss in the tires of a vehicle, comprising the steps of

- determining a test variable from the wheel radii or from variables mirroring these wheel radii of at least two wheels,

**characterized by** the steps of

- preparing a table of correction values by means of the method as claimed in any one of claims 1 to 12,
- determining a driving dynamics variable of the vehicle,
- reading a correction value from the table in accordance with the value of the driving dynamics variable, and
- correcting the test variable by means of the correction value.

**14.** Method of identifying the pressure loss in a tire of a wheel,
**characterized by** the steps of

- determining a test variable for identifying pressure loss in the tire of a vehicle by means of the method as claimed in claim 13,
- comparing the test variable with a threshold value, and
- identifying pressure loss when the test variable reaches or passes the threshold value.

**15.** Method as claimed in claim 14,
**characterized in that** when pressure loss is assumed at any one of the driven wheels, the threshold value is modified in such a manner that the pressure loss identification becomes more sensitive.

**Revendications**

**1.** Procédé pour établir un tableau de valeurs de correction pour une grandeur d'essai afin de détecter une perte de pression dans un pneu d'un véhicule, comportant les étapes suivantes :

- déterminer une grandeur de la dynamique de conduite du véhicule, et
- déterminer une valeur de correction pour la grandeur d'essai et mémoriser celle-ci en fonction de la valeur de la grandeur de la dynamique de conduite qui régnait

lors de la détermination de la valeur de correction,
**caractérisé en ce que** la grandeur d'essai est déterminée à partir d'un quotient de deux sommes de chacune deux rayons de la roue ou grandeurs qui reflètent ces rayons de la roue.

**2.** Procédé selon la revendication 1, **caractérisé en ce que** la détermination de la valeur de correction ne s'effectue que lorsque la dynamique du véhicule satisfait à des conditions déterminées en ce qui concerne ses valeurs et/ou variations dans le temps.

**3.** Procédé selon la revendication 2, **caractérisé en ce que** la détermination de la valeur de correction ou sa mémorisation ne s'effectue que lorsque la dynamique de conduite est restée à l'intérieur d'une plage de valeurs déterminée pendant une durée déterminée.

**4.** Procédé selon l'une des revendications précédentes,
**caractérisé en ce qu'**il est formé une somme se référant à des grandeurs des roues avant du véhicule et l'autre somme se référant à des grandeurs des roues arrière du véhicule.

**5.** Procédé selon l'une des revendications précédentes,
**caractérisé en ce qu'**il est formé une somme se référant à des grandeurs des roues sur le côté droit du véhicule et l'autre somme se référant à des grandeurs des roues sur le côté gauche du véhicule.

6. Procédé selon l'une des revendications précédentes, **caractérisé en ce qu'**il est formé une somme se référant à des grandeurs des roues d'une diagonale du véhicule et l'autre somme se référant à des grandeurs des roues de l'autre diagonale du véhicule.

7. Procédé selon l'une des revendications précédentes, **caractérisé en ce qu'**on détermine des valeurs de correction pour plusieurs valeurs de la grandeur de la dynamique de conduite et on extrapole des valeurs de correction à partir des valeurs de correction déterminées, pour d'autres valeurs de la grandeur de la dynamique de conduite.

8. Procédé selon l'une des revendications précédentes, **caractérisé en ce que** la grandeur de la dynamique de conduite est un moment des roues qui est déterminé à partir du couple moteur et du rapport de transmission.

9. Procédé selon la revendication 8, **caractérisé en ce que** le rapport de transmission est déterminé à partir de la vitesse de rotation du moteur et de la vitesse des roues.

10. Procédé selon l'une des revendications précédentes, **caractérisé en ce que** la grandeur de la dynamique de conduite est une grandeur caractéristique de la courbe obtenue lors d'une conduite en courbe.

11. Procédé selon la revendication 10, **caractérisé en ce qu'**on peut utiliser comme grandeur caractéristique de la courbe une ou plusieurs des grandeurs suivantes :

- l'embardée, également en combinaison avec la vitesse ou l'accélération du véhicule,
- le rayon de la courbe en combinaison avec la vitesse du véhicule ou son accélération,
- l'angle de braquage en combinaison avec la vitesse du véhicule ou son accélération,
- l'accélération transversale, également en combinaison avec la vitesse ou l'accélération du véhicule.

12. Procédé selon la revendication 11, **caractérisé en ce que** la mémorisation des valeurs de correction s'effectue en fonction de plusieurs grandeurs caractéristiques de la courbe.

13. Procédé pour déterminer une grandeur d'essai corrigée afin de détecter une perte de pression dans les pneus d'un véhicule, comportant les étapes suivantes :

- déterminer une grandeur d'essai à partir des rayons des roues ou à partir de grandeurs qui reflètent ces rayons des roues, au moins de deux roues,

**caractérisé par** les étapes suivantes :

- établir un tableau des valeurs de correction avec le procédé suivant l'une des revendications 1 à 12,
- déterminer une grandeur de la dynamique de conduite du véhicule,
- extraire une valeur de correction du tableau en fonction de la valeur de la grandeur de la dynamique de conduite, et
- corriger la grandeur d'essai avec la valeur de correction.

14. Procédé pour détecter la perte de pression du pneu d'une roue, **caractérisé par** les étapes suivantes :

- déterminer une grandeur d'essai pour détecter une perte de pression d'un pneu d'un véhicule avec le procédé selon la revendication 13,
- comparer la grandeur d'essai à une valeur de seuil, et
- reconnaître une perte de pression lorsque la grandeur d'essai atteint ou dépasse la valeur de seuil.

15. Procédé selon la revendication 14, **caractérisé en ce que** lorsque l'on suppose une perte de pression sur l'une des roues motrices, la valeur de seuil est modifiée de manière que la reconnaissance de la perte de pression soit plus sensible.

## Fig.1A

## Fig. 1B

Fig.1C

$\omega + \omega s$

$\omega$

10

15

13

15

16

12

# Fig. 2A

# Fig. 2B

# Fig. 2C

## Fig. 3

## Fig. 4

Fig. 5

Fig. 6